# EUROPEAN PATENT APPLICATION

(11) **EP 4 822 861 A1**
(43) Date of publication of application: **14.10.2026**
(21) Application number: 25857504.2
(22) Date of filing: 22.08.2025
(51) Int. Cl.: H01M 50/358, H01M 50/342, H01M 50/383, H01M 50/249

(54) **BATTERY UNIT**

(30) Priority: 23.08.2024 KR 20240113446; 19.08.2025 KR 20250115081
(71) Applicant: LG Energy Solution, Ltd., Seoul 07335 (KR)
(72) Inventor: JANG, Sung-Hwan, Daejeon 34122 (KR); KIM, Gwan-Woo, Daejeon 34122 (KR); LEE, Su-Hyeong, Daejeon 34122 (KR); CHOI, Hae-Won, Daejeon 34122 (KR)
(74) Representative: Plasseraud IP
(86) International application number: PCT/KR2025/012765
(87) International publication number: WO 2026/043316

(57) **Abstract**

A battery unit includes a case providing an internal space and including a top cover; and a battery cell located inside the case. The top cover includes a top plate that covers the battery cell and has a venting hole; and a venting guide that is disposed on an upper surface of the top plate and covers at least a portion of the venting hole.

## Description

### TECHNICAL FIELD

The present disclosure relates to a battery unit.

This application is based on and claims priority from Korean Patent Application No. 10-2024-0113446 filed on August 23, 2024, with the Korean Intellectual Property Office, and Korean Patent Application No. 10-2025-0115081 filed on August 19, 2025, with the Korean Intellectual Property Office, the disclosures of which are incorporated herein in their entirety by reference.

### BACKGROUND ART

As the demand for portable electronic devices such as smartphones, tablet PCs, and smartwatches has significantly increased, and electric vehicles are gradually becoming more widespread, research into batteries mounted in such devices, for example, secondary batteries capable of repeated charging and discharging, has been actively conducted.

Currently, commercialized batteries include, for example, nickel-cadmium batteries, nickel-hydrogen batteries, nickel-zinc batteries, and lithium batteries. Of these batteries, lithium batteries are gaining considerable attention due to their advantages including a substantially low memory effect to allow a high degree of freedom in charging and discharging, a very low self-discharging rate, and high energy density, as compared to nickel-based batteries.

Such lithium secondary batteries typically use lithium-based oxides and carbon materials as positive and negative electrode active materials, respectively. A lithium secondary battery includes an electrode assembly in which a positive electrode plate and a negative electrode plate, each coated with their respective active materials, are arranged with a separator interposed therebetween, and an exterior housing to hermetically seal and contain the electrode assembly along with an electrolyte, for example, a battery case.

In general, lithium secondary batteries may be classified, according to the shape of the exterior housing, into cylindrical secondary batteries, in which the electrode assembly is housed in a metal can, and pouch-type secondary batteries, in which the electrode assembly is housed in a pouch made of an aluminum laminate sheet.

Recently, secondary batteries have been widely used not only in small devices such as portable electronic devices, but also in medium and large devices such as electric vehicles and energy storage systems (ESS), for driving or energy storage purposes. These secondary batteries may be housed together inside a module case in an electrically connected state to form a single battery module. In this case, each secondary battery included in the battery module may be referred to as a battery cell. A plurality of such battery modules may be connected together to form a battery pack.

However, when a battery pack includes a plurality of battery modules, and each battery module includes a plurality of battery cells, the system may be vulnerable to thermal chain reactions between battery modules or between battery cells. For example, when an event such as thermal runaway occurs within one of the battery modules, it is necessary to suppress the propagation of the thermal runaway to other battery modules or battery cells. When the propagation of thermal runaway between battery modules or battery cells is not properly suppressed, an event occurring in a specific battery module or battery cell may trigger a chain thermal reaction in other modules or cells, potentially leading to an explosion, fire, or a significant increase in the severity of such incidents.

For example, when an event such as thermal runaway occurs in one of the battery modules, gas or flames may be randomly discharged to the outside. When the discharge of gas or flames is not properly controlled, the gas or flames may be released toward other battery modules, which may potentially trigger a thermal chain reaction in those modules. Especially at the front side of a battery module, module terminals may be present for electrical connection with other battery modules or the battery pack, such as through a module busbar or similar structure. Therefore, when flames are discharged toward the front side of such a battery module, the discharged flames may damage the module terminals within the battery pack and cause an electrical short. Furthermore, since another battery module may be located in front of the battery module, flames discharged in that direction are likely to reach the adjacent battery module, making fire propagation between modules more likely.

When thermal propagation between battery modules or battery cells is not properly controlled, a rapid voltage drop may occur in the battery module or battery pack. Then, the device in which the battery module or battery pack is installed may be caused to shut down unexpectedly, potentially leading to unforeseen damage. For example, when a sudden voltage drop occurs in a battery pack while an electric vehicle is in operation, there may not be sufficient time to move the vehicle to a safe location.

In addition, when thermal propagation between battery modules or battery cells is not properly controlled and a fire or explosion occurs suddenly, there is a high possibility of causing injury to the user. For example, in the event of thermal runaway in an electric vehicle, when sufficient time is not secured before the situation develops into a full-scale fire, the occupants may not be able to evacuate safely.

### DISCLOSURE

### Technical Problem

The present disclosure provides a battery unit with an improved structure capable of appropriately controlling the discharge of flames generated inside the battery unit, and a battery pack and a vehicle including the same.

The present disclosure provides a structure that enables smooth discharge of venting gas generated inside the battery unit.

The present disclosure provides a structure capable of maintaining the opening and closing function of a venting device even when a thermal event occurs.

The present disclosure provides a structure capable of blocking external venting gas from entering the interior of the battery unit.

However, the technical problems to be solved by the present disclosure are not limited to those described above, and other problems not mentioned will be clearly understood by those skilled in the art from the following description of the disclosure.

### Technical Solution

According to an embodiment of the present disclosure, a battery unit may include: a case providing an internal space and including a top cover; and a battery cell located inside the case. The top cover includes: a top plate that covers the battery cell and has a venting hole; and a venting guide that is disposed on an upper surface of the top plate and covers at least a portion of the venting hole.

The venting guide may include: a peripheral wall extending along a periphery of the venting hole; and a cover portion extending from the peripheral wall and configured to cover a portion of the venting hole.

The battery unit may further include an inner cover disposed between the top cover and the battery cell.

The battery unit may further include an adhesive member disposed between the top cover and the inner cover.

The inner cover may include a protrusion protruding upward and inserted into the venting hole.

The inner cover may include a guide hole formed in the protrusion and facing the venting guide.

The venting guide may be configured to cover approximately 50% or less of an area of the venting hole.

A plurality of venting holes may be provided, and a plurality of venting guides may be provided to correspond one-to-one with the plurality of venting holes.

Each of the plurality of venting guides may be arranged to guide flow in the same direction.

A total area of the plurality of venting holes may be configured to be approximately 30% or less of an area of the top plate.

The top plate and the venting guide are integrally formed.

In another aspect, a battery pack includes the battery unit according to the present disclosure.

The battery may further include a base plate on which the battery unit is mounted; and a side wall installed on the base plate. The venting guide may be configured to guide flow toward the side wall.

In still another aspect of the present disclosure, a vehicle includes the battery unit according to the present disclosure.

According to another embodiment of the present disclosure, a pack case includes: a lower frame defining a space for accommodating a battery cell; and a top cover configured to cover a battery unit accommodated in the space. The top cover includes a plurality of venting holes and a plurality of venting guides each configured to cover a portion of a corresponding venting hole. Each of the plurality of venting guides includes: a peripheral wall protruding from an upper surface of the top cover and extending along a periphery of the corresponding venting hole; and a cover portion formed on an upper part of the peripheral wall and configured to cover a portion of the corresponding venting hole.

The cover portion may be formed in a roof shape on the upper part of the peripheral wall and covers a portion of the corresponding venting hole.

A total area of the plurality of venting holes may be configured to be approximately 30% or less of an area of the top cover.

The venting guide may be configured to cover approximately 50% or less of an area of the venting hole.

Each of the plurality of venting guides may be arranged to guide flow in the same direction.

The top cover and the plurality of venting guides may be integrally formed.

### Advantageous Effects

According to at least one embodiment of the present disclosure, when gas or flame is generated inside the battery unit, the discharge of such gas or flame may be appropriately controlled.

According to at least one embodiment of the present disclosure, a venting gas generated inside the battery unit may be smoothly discharged.

According to at least one embodiment of the present disclosure, the electrical safety of the battery unit may be improved.

According to at least one embodiment of the present disclosure, thermal propagation may be suppressed.

According to at least one embodiment of the present disclosure, transmission of a thermal event caused by external flame or gas to the battery unit may be suppressed.

### DESCRIPTION OF DRAWINGS

The following drawings attached hereto illustrates embodiments of the present disclosure and serve to further understand the technical idea of the present disclosure together with the detailed description of the disclosure to be described later. Therefore, the present disclosure should not be construed as being limited to the matters illustrated in the drawings.
FIG. 1 is a view illustrating a battery unit according to an embodiment of the present disclosure.
FIG. 2 is a view illustrating a separated configuration of a portion of the battery unit of FIG. 1.
FIG. 3 is an enlarged view of the top cover of FIG. 2.
FIG. 4 is a sectional view taken along line B-B' of FIG. 2.
FIG. 5 is a view illustrating the top cover of FIG. 2 from a different direction.
FIG. 6 is a view illustrating the top cover of FIG. 2 from a different direction.
FIG. 7 is an enlarged view of the inner cover of FIG. 2.
FIG. 8 is a sectional view taken along line A-A' of FIG. 1.
FIG. 9 is a view illustrating a change in the cross-sectional structure along the section line A-A of FIG. 1 when a thermal event occurs.
FIG. 10 is an enlarged view of portion C of FIG. 1 when a thermal event occurs.
FIG. 11 is a view illustrating the movement of venting gas and particles in the battery unit of FIG. 1 when a thermal event occurs.
FIG. 12 is a view illustrating a battery pack according to an embodiment of the present disclosure.
FIG. 13 is a view illustrating a separated configuration of a portion of the battery pack of FIG. 12.
FIG. 14 is a view illustrating the movement of venting gas and particles in the battery pack of FIG. 12.

Corresponding reference characters indicate corresponding components throughout the several views of the drawings. The drawing figures presented are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

### BEST MODE

Hereinafter, embodiments of the present disclosure are described in detail with reference to the accompanying drawings. Words and terms used in the detailed description and the claims herein should not be interpreted to be limited to their usual or dictionary meanings, but should be interpreted to have meanings and concepts that correspond to the technical idea of the present disclosure in compliance with the principle that inventors may appropriately define terms and concepts for the purpose of best describing the present disclosure.

Accordingly, it can be appreciated that the embodiments described herein and the configurations illustrated in the drawings are merely examples of the present disclosure, which do not exhaustively represent the technical idea of the present disclosure, and various equivalents and modifications may be made to substitute the present disclosure at the time of filing the present disclosure.

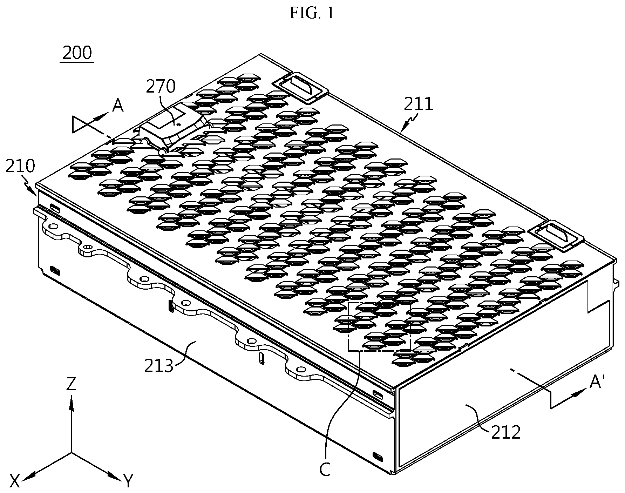

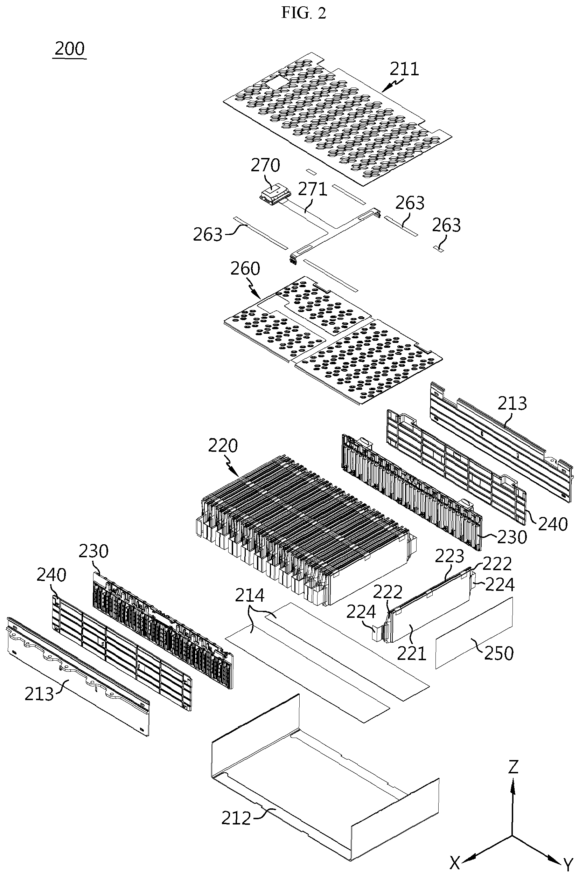

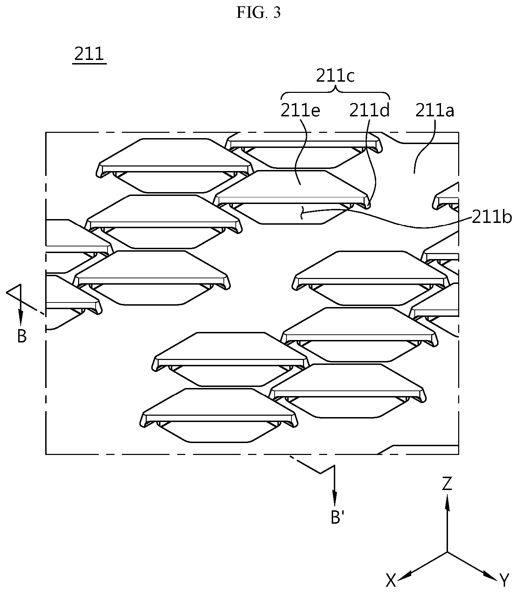

FIG. 1 is a view illustrating a battery unit 200 according to an embodiment of the present disclosure. FIG. 2 is a view illustrating a separated configuration of a portion of the battery unit 200 of FIG. 1. FIG. 3 is an enlarged view illustrating a top cover 211 of FIG. 2.

Referring to FIGS. 1 to 3, the battery unit 200 may include a case 210. The battery unit 200 may also be referred to as a battery module 200 including a plurality of battery cells 220. The case 210 may have a rectangular parallelepiped shape. The case 210 may include a top cover 211 and a lower frame 212. The case 210 may provide an internal space for accommodating the battery module 200. The top cover 211 may have a rectangular shape. The lower frame 212 may include a bottom plate. The lower frame 212 may include a pair of side plates extending from the bottom plate. The lower frame 212 may be integrally formed.

Each battery cell 220 may be accommodated inside the case 210. The battery cell 220 may refer to a secondary battery. According to one embodiment, the battery cell 220 may be a pouch-type secondary battery. However, the shape of the battery cell 220 is not limited to a pouch shape and may have various shapes such as a cylindrical or prismatic shape. A plurality of battery cells 220 may be provided.

The top cover 211 may include a top plate 211a. The top plate 211a may have a rectangular shape. The top plate 211a may be located above the battery cell 220. The top plate 211a may cover the battery cell 220. The top plate 211a may include a venting hole 211b. The venting hole 211b may penetrate through the top plate 211a. According to one embodiment, the venting hole 211b may have a hexagonal shape.

The top cover 211 may include a venting guide 211c. The venting guide 211c may be provided on an upper surface of the top plate 211a. The venting guide 211c may be installed, fastened, coupled, fixed, or attached to the upper surface of the top plate 211a. The venting guide 211c may extend from the top plate 211a. The venting guide 211c may cover a portion of the venting hole 211b.

When a thermal event occurs, venting gas G and particles P may be discharged from the battery cell 220. The particles P may be substances such as an electrode assembly or an electrolyte inside the battery cell 220. The particles P may move together with the venting gas G. The venting guide 211c may guide the discharge direction of the venting gas G and the particles P. The venting gas G and the particles P may be discharged through a portion of the venting hole 211b that is not covered by the venting guide 211c. Due to the venting guide 211c, venting control of the battery unit 200 may be facilitated.

Referring to FIGS. 1 to 3, the case 210 may include an end cover 213. A pair of end covers 213 may be provided. The pair of end covers 213 may be coupled to front and rear sides of the lower frame 212, respectively. The end cover 213 may have a rectangular shape. The end cover 213 may form an outer appearance of the battery unit 200.

The front end cover 213 may be installed, fastened, coupled, fixed, or attached to the top cover 211. The top cover 211 may be installed, fastened, coupled, fixed, or attached to the lower frame 212. The rear end cover 213 may be installed, fastened, coupled, fixed, or attached to the top cover 211.

A plurality of battery cells 220 may be provided. The plurality of battery cells 220 may be stacked along a left-right direction or a Y-axis direction. Each of the battery cells 220 may include an accommodation portion 221 having an electrode assembly. The battery cell 220 may include first sealing portions 222 protruding from the front and rear sides of the accommodation portion 221, respectively. The battery cell 220 may include a second sealing portion 223 protruding upward from the accommodation portion 221. In addition, the battery cell 220 may include electrode leads 224 protruding from first sealing portions 222 on the front and rear sides of the accommodation portion 221, respectively. Each of the battery cells 220 may extend in a front-rear direction or an X-axis direction. The electrode leads 224 may protrude from the front side and rear side of the accommodation portion 221, respectively. Meanwhile, the protruding direction of the electrode leads 224 may be a single direction rather than both front and rear sides depending on the design of the battery cell 220.

A pad 250 may be disposed between a plurality of battery cells 220. The pad 250 may be disposed between at least some of the battery cells 220 and/or on the outer periphery of the stacked body. For example, the pad 250 may be configured to be disposed between every four battery cells 220 stacked in the left-right direction.

The pad 250 may be made of an elastic material to absorb swelling of the battery cell 220. For example, the pad 250 may be made of a foam material such as polyurethane. Alternatively, the pad 250 may be made of a material capable of blocking heat or flame. For example, the pad 250 may be made of an insulating material or fire-resistant material such as silicone or mica.

A busbar frame assembly 230 may be respectively provided on the front and rear sides of the plurality of battery cells 220. The busbar frame assembly 230 may be electrically connected to the electrode leads 224 of the plurality of battery cells 220.

An insulation cover 240 may be provided between the busbar frame assembly 230 and the end cover 213. A pair of insulation covers 240 may be provided. A front insulation cover 240 may be disposed between the front end cover 213 and the front busbar frame assembly 230. A rear insulation cover 240 may be disposed between the rear end cover 213 and the rear busbar frame assembly 230. The insulation cover 240 may include a material having electrical insulation. The insulation cover 240 may be provided between the busbar frame assembly 230 and the end cover 213.

The battery unit 200 may include a heat transfer member 214. The heat transfer member 214 may be disposed between the bottom plate and the plurality of battery cells 220. The heat transfer member 214 may include a material having high thermal conductivity. The heat transfer member 214 may couple, fix, or attach the plurality of battery cells 220 to the bottom plate.

The battery unit 200 may include a connector 270. The connector 270 may be provided on the top cover 211. The connector 270 may electrically connect the battery unit 200 to an external device. For example, the external device may be another battery unit, a battery module system (BMS), or a battery pack. An FPCB 271 may be connected to the connector 270. In addition, the FPCB 271 may be electrically connected to the plurality of battery cells 220.

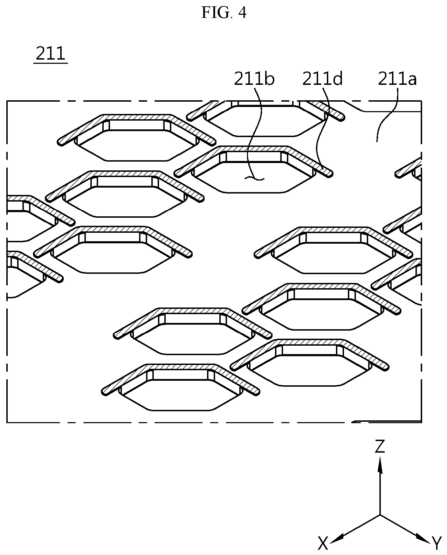

FIG. 4 is a sectional view taken along line B-B' of FIG. 3. Referring to FIGS. 3 and 4, the venting guide 211c may include a surrounding wall 211d. The surrounding wall 211d may be provided on the upper surface of the top plate 211a. The surrounding wall 211d may protrude from the upper surface of the top plate 211a. The surrounding wall 211d may extend along the periphery of the venting hole 211b. For example, the surrounding wall 211d may extend along approximately half of the periphery of the venting hole 211b.

The venting guide 211c may include a cover portion 211e. The cover portion 211e may extend from the surrounding wall 211d. The cover portion 211e may be formed in a roof shape on the upper part of the surrounding wall 211d to cover a portion of the venting hole 211b. The cover portion 211e may face the venting hole 211b.

The venting guide 211c may guide the flow of the venting gas G and the particles P discharged through the venting hole 211b. In the present embodiment, the surrounding wall 211d and the cover portion 211e are designed to have a parallelogram shape, but the design is not limited thereto, and may be modified into various shapes such as a circular shape or a triangular shape depending on the type or the form of the vented gas G and the particles P so as to guide the flow of the gas G and the particles P.

According to one embodiment, the surrounding wall 211d and the cover portion 211e may be integrally formed. The venting guide 211c may be integrally formed with the top plate 211a. The top cover 211 may be integrally formed.

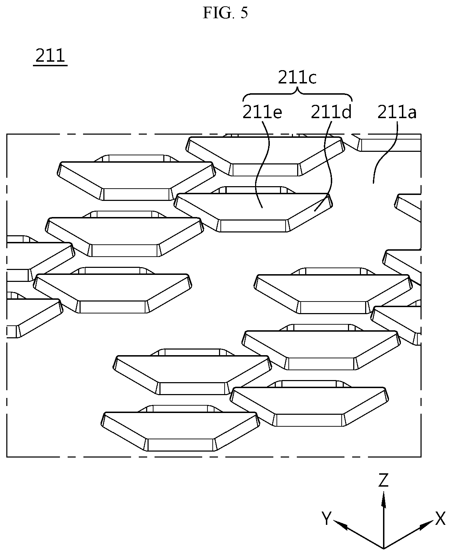

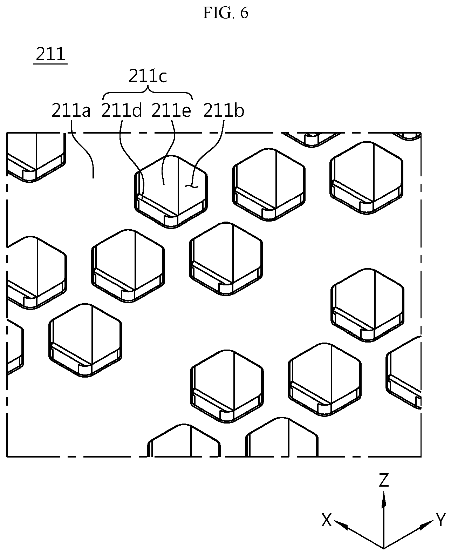

FIG. 5 is a view illustrating the top cover 211 of FIG. 2 from a different direction. FIG. 6 is a view illustrating the top cover 211 of FIG. 2 from another direction. Referring to FIGS. 3 to 6, a plurality of venting holes 211b may be provided. A plurality of venting guides 211c may be provided. The venting holes 211b and the venting guides 211c may be provided provided to correspond one-to-one with each other. The plurality of venting holes 211b may be arranged to form an array. The plurality of venting guides 211c may be arranged to form an array.

The venting guide 211c may be configured to cover about 50% or less of the area of the venting hole 211b. The cover portion 211e may be configured to cover about 50% or less of the area of the venting hole 211b. The venting guide 211c may guide the flow of venting gas G and particles P discharged through the venting hole 211b without obstructing the flow of the venting gas G and the particles P.

Referring to FIGS. 3 to 6, a total area of the plurality of venting holes 211b may be configured to be about 30% or less of the area of the top plate 211a. As a result, the venting gas G and the particles P may be easily discharged, and the venting gas G and the particles P may have a sufficient flow velocity at the time of discharge. With the venting gas G and the particles P having a sufficient flow velocity upon discharge, a flow direction of the venting gas G and the particles P may be stably formed.

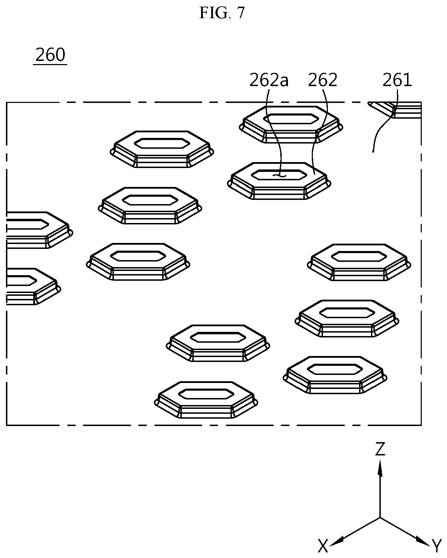

FIG. 7 is an enlarged view illustrating an inner cover 260 of FIG. 2. Referring to FIGS. 2 and 7, the inner cover 260 may be disposed between the top cover 211 and the battery cell 220. The inner cover 260 may include a material having electrical insulation. The inner cover 260 may electrically insulate the battery cell 220 from the top cover 211. The inner cover 260 may have a rectangular shape. The inner cover 260 may be installed, fastened, coupled, fixed, or attached to a lower surface of the top cover 211.

An adhesive member 263 may be disposed between the top cover 211 and the inner cover 260. For example, the adhesive member 263 may be a double-sided tape. The adhesive member 263 may couple, fix, or attach the inner cover 260 to the lower surface of the top cover 211.

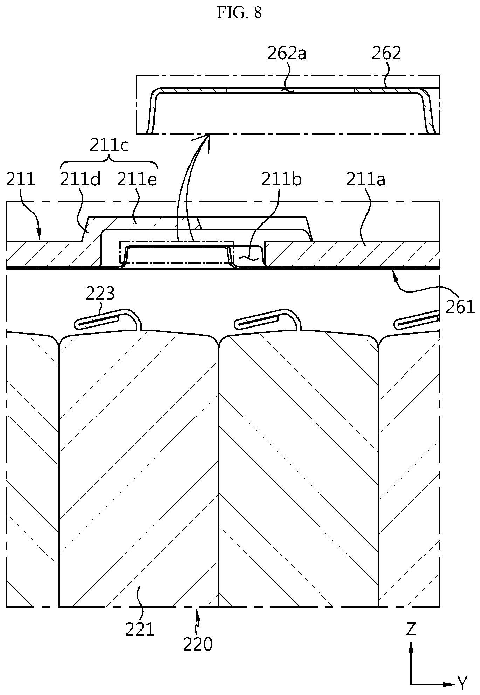

FIG. 8 is a sectional view taken along line A-A' of FIG. 1. Referring to FIGS. 2, 7, and 8, the inner cover 260 may include a sheet 261. The sheet 261 may be installed, fastened, coupled, fixed, or attached to a lower surface of the top cover 211. The sheet 261 may be installed, fastened, coupled, fixed, or attached to the lower surface of the top plate 211a.

The inner cover 260 may include a protrusion 112b. The protrusion 262 may protrude upward from the sheet 261 and may be integrally formed with the sheet 261. The protrusion 262 may be integrally formed with the sheet 261. At least a portion of the protrusion 262 may be inserted into the venting hole 211b. A plurality of protrusions 262 may be provided. The plurality of protrusions 262 may be provided to correspond one-to-one with the plurality of venting holes 211b.

By inserting the protrusion 262 into the venting hole 211b, alignment between the inner cover 260 and the top cover 211 may be facilitated. In addition, assembly between the inner cover 260 and the top cover 211 may be facilitated.

The inner cover 260 may include a guide hole 262a. The guide hole 262a may be formed in the protrusion 262. The guide hole 262a may face the venting guide 211c. The guide hole 262a may face the cover portion 211e. The venting guide 211c may cover the guide hole 262a. The cover portion 211e may cover the guide hole 262a.

When a thermal event occurs, the venting gas G and particles P may be discharged through the guide hole 262a. The venting gas G and particles P discharged through the guide hole 262a may collide with the venting guide 211c. The venting gas G and particles P discharged through the guide hole 262a may collide with the cover portion 211e. The guide hole 262a may guide the venting gas G and particles P to collide with the cover portion 211e. The venting gas G and the particles P may be discharged through a portion of the venting hole 211b that is not covered by the venting guide 211c.

The surrounding wall 211d may block the venting gas G and particles P from flowing back into the inside of the battery unit 200 through the guide hole 262a.

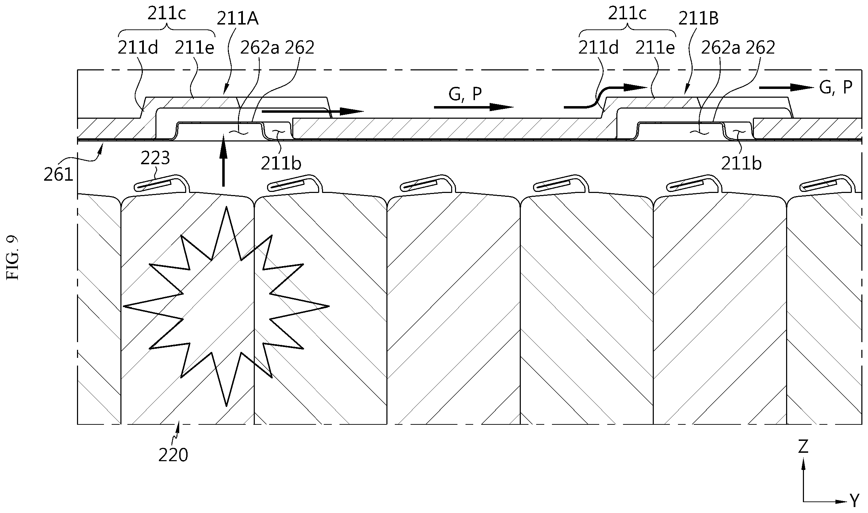

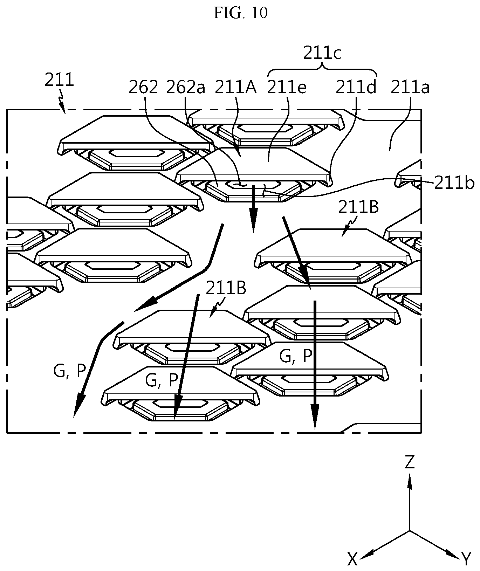

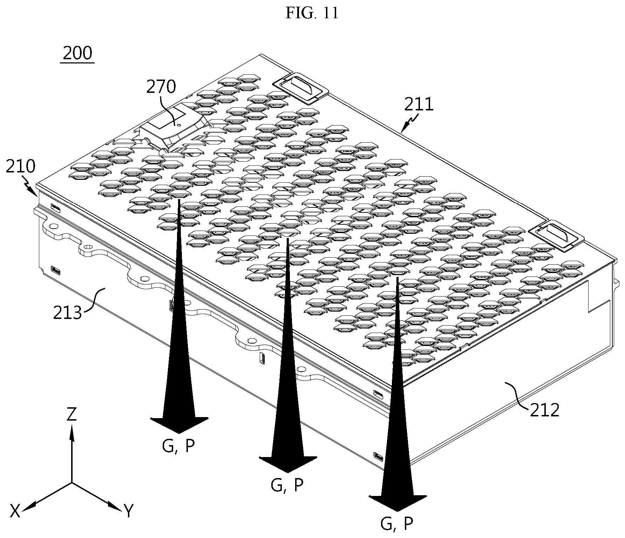

FIG. 9 is a view illustrating a change in the cross-sectional structure along the section line A-A of FIG. 1 when a thermal event occurs. FIG. 10 is an enlarged view of portion C of FIG. 1 when a thermal event occurs. FIG. 11 is a view illustrating the movement of the venting gas G and the particles P in the battery unit 200 of FIG. 1 when a thermal event occurs. Referring to FIGS. 9 to 11, each of the plurality of venting guides 211c may be arranged to guide the flow in the same direction. The venting gas G and particles P discharged by the venting guide 211c may collide with an adjacent venting guide 211c. After the collision, the venting gas G and particles P may flow along an outer surface of the adjacent venting guide 211c. The venting gas G and particles P may flow along the surrounding wall 211d of the adjacent venting guide 211c.

The venting gas G and particles P may have a high flow velocity. Accordingly, the venting gas G and particles P may be prevented from flowing into the venting hole 211b corresponding to the adjacent venting guide 211c. Alternatively, the venting gas G and particles P may be prevented from flowing into the guide hole 262a corresponding to the adjacent venting guide 211c. As a result, the propagation of the thermal event may be suppressed.

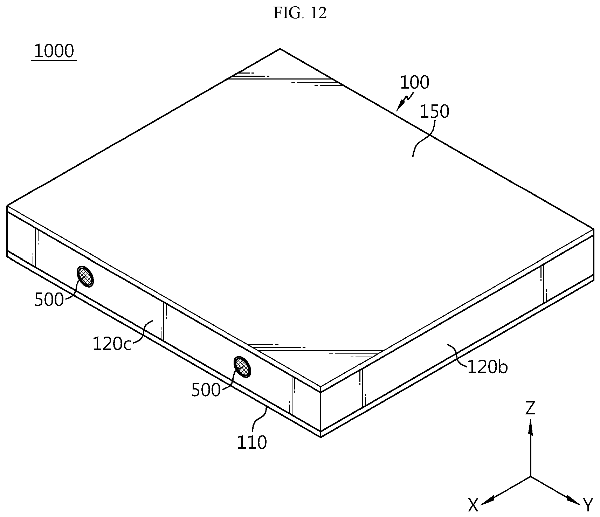

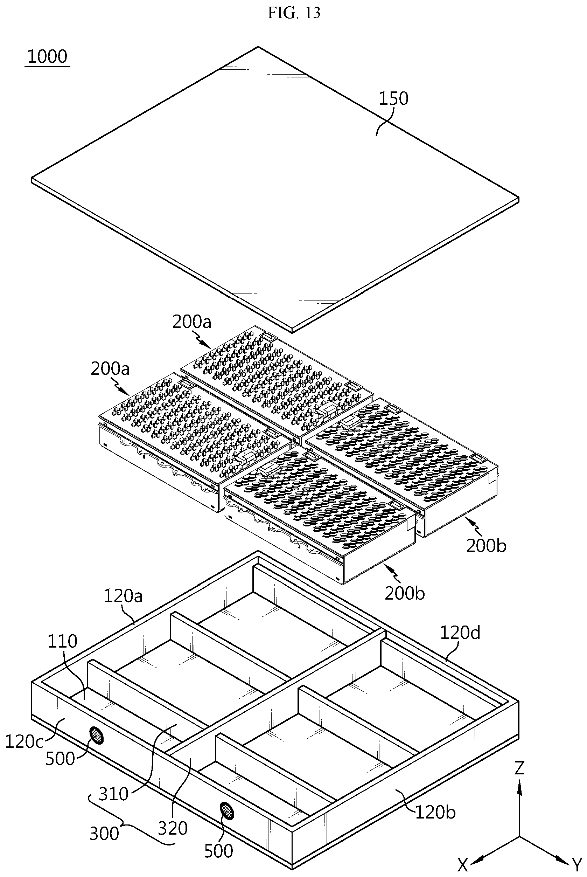

FIG. 12 is a view illustrating a battery pack 1000 according to one embodiment of the present disclosure. FIG. 13 is a view illustrating a separated configuration of a portion of the battery pack 1000 of FIG. 12.

Referring to FIGS. 12 and 13, a battery pack 1000 according to one embodiment of the present disclosure may include a pack case 100. The pack case 100 may form an outer appearance of the battery pack 1000. The pack case 100 may have a rectangular parallelepiped shape. The pack case 100 may provide an internal space. The pack case 100 may include a base plate 110. The base plate 110 may have a rectangular shape. The base plate 110 may have a flat shape. The base plate 110 may form an outer appearance of the battery pack 1000. The base plate 110 may provide an internal space of the battery pack 1000.

The pack case 100 may include a first side wall 120a. The first side wall 120a may be installed, fastened, coupled, fixed, or attached to an upper surface of the base plate 110. The first side wall 120a may form an outer appearance of the battery pack 1000. The first side wall 120a may provide an internal space. The first sidewall 120a may extend along a left edge of the base plate 110.

The pack case 100 may include a second side wall 120b. The second side wall 120b may be installed, fastened, coupled, fixed, or attached to the upper surface of the base plate 110. The second side wall 120b may form an outer appearance of the battery pack 1000. The second side wall 120b may provide an internal space. The second sidewall 120b may extend along a right edge of the base plate 110.

The pack case 100 may include a third side wall 120c. The third side wall 120c may be installed, fastened, coupled, fixed, or attached to the upper surface of the base plate 110. The third side wall 120c may form an outer appearance of the battery pack 1000. The third side wall 120c may provide an internal space. The third sidewall 120c may extend along a front edge of the base plate 110.

The pack case 100 may include a fourth side wall 120d. The forth side wall 120d may be installed, fastened, coupled, fixed, or attached to the upper surface of the base plate 110. The fourth side wall 120d may form an outer appearance of the battery pack 1000. The forth side wall 120d may provide an internal space. The fourth sidewall 120d may extend along a rear edge of the base plate 110.

The pack case 100 may include a pack cover 150. The pack cover 150 may have a rectangular plate shape. The pack case 150 may form an outer appearance of the battery pack 1000. The pack cover 150 may be installed, fastened, coupled, fixed, or attached to the first side wall 120a. The pack cover 150 may be installed, fastened, coupled, fixed, or attached to the second side wall 120b. The pack cover 150 may be installed, fastened, coupled, fixed, or attached to the third side wall 120c. The pack cover 150 may be installed, fastened, coupled, fixed, or attached to the fourth side wall 120d. The pack cover 150 may cover an internal space of the battery pack 1000. The pack cover 150 may be located above battery units 200a and 200b.

The battery pack 1000 may include a partition wall 300. The partition wall 300 may include a first partition wall 310 and a second partition wall 320. A plurality of partition walls 300 may be provided. The partition wall 300 may be installed, fastened, fixed, coupled, or attached to an upper surface of the base plate 110. The partition wall 300 may partition an internal space of the battery pack 1000.

The battery pack 1000 may include a venting device 500. The venting device 500 may be installed on the first sidewall 120a. For example, the venting device 500 may be a gas valve or a vent plug. When the pressure inside the pack case 100 increases, the venting device 500 may be opened to discharge venting gas G or particles P.

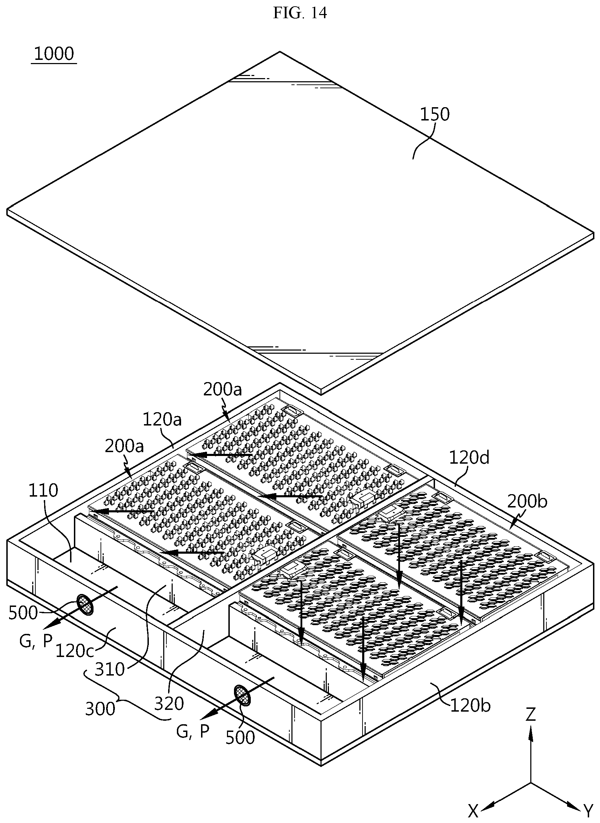

FIG. 14 is a view illustrating the movement of the venting gas G and the particles P in the battery pack 1000 of FIG. 12. Referring to FIG. 14, in one embodiment, the plurality of venting guides 211c of the battery unit 200a may guide the flow of the venting gas G and the particles P toward the first sidewall 120a. The venting gas G and the particles P may flow along the first sidewall 120a in the forward direction, i.e., the +X-axis direction, or toward the third sidewall 120c.

In one embodiment, the plurality of venting guides 211c of the battery unit 200b may guide the flow of the venting gas G and the particles P toward the second sidewall 120b. The venting gas G and the particles P may flow along the second sidewall 120b in the forward direction, i.e., the +X-axis direction, or toward the third sidewall 120c.

The venting gas G and the particles P may be discharged to the outside of the battery pack 1000 through the venting device 500. As the flow of the venting gas G and the particles P is guided by the venting guides 211c, damage to adjacent battery units 200 due to the venting gas G and the particles P may be reduced. In addition, the venting gas G and the particles P may be rapidly discharged to the outside of the battery pack 1000.

The battery pack 1000 according to the present disclosure may further include, in addition to the battery unit 200, various other components such as a BMS, a busbar, a relay, and a current sensor, which are well known as components of battery packs at the time of filing of the present disclosure.

Meanwhile, components such as a BMS, a busbar, a relay, and a current sensor may be included as components of the battery unit 200 according to the present disclosure. In this case, the BMS, busbar, relay, and current sensor may be provided inside the case 210. In such a case, the battery unit 200 may be referred to as a battery pack.

The battery unit 200 according to the present disclosure may be applied to a vehicle such as an electric vehicle or a hybrid vehicle. For example, the vehicle according to the present disclosure may include the battery unit 200 or the battery pack 1000 according to the present disclosure. In addition, the vehicle according to the present disclosure may further include various other components included in the vehicle, in addition to the battery unit 200 or the battery pack 1000. For example, the vehicle according to the present disclosure may include, in addition to the battery unit 200, a vehicle body, a motor, or control devices such as an electronic control unit (ECU).

While the present disclosure has been described using limited embodiments and drawings, the present disclosure is not limited thereto, and it may be appreciated that various modifications and changes may be made by those having ordinary skill in the art of the present disclosure within the technical idea of the present disclosure and the equitable scope of the claims set forth below.

## Claims

1. A battery unit comprising:
a case providing an internal space and including a top cover; and
a battery cell located inside the case,
wherein the top cover includes:
a top plate configured to cover the battery cell and having a venting hole; and
a venting guide disposed on an upper surface of the top plate and configured to cover at least a portion of the venting hole.

2. The battery unit according to claim 1, wherein the venting guide includes:
a peripheral wall extending along a periphery of the venting hole; and
a cover portion extending from the peripheral wall and configured to cover a portion of the venting hole.

3. The battery unit according to claim 1, further comprising:
an inner cover disposed between the top cover and the battery cell.

4. The battery unit according to claim 3, further comprising:
an adhesive disposed between the top cover and the inner cover.

5. The battery unit according to claim 3, wherein the inner cover includes a protrusion protruding upward and inserted into the venting hole.

6. The battery unit according to claim 5, wherein the inner cover includes a guide hole formed in the protrusion and facing the venting guide.

7. The battery unit according to claim 1, wherein the venting guide is configured to cover approximately 50% or less of an area of the venting hole.

8. The battery unit according to claim 1, wherein a plurality of venting holes is provided, and
a plurality of venting guides is provided to correspond one-to-one with the plurality of venting holes.

9. The battery unit according to claim 8, wherein each of the plurality of venting guides is arranged to guide flow in the same direction.

10. The battery unit according to claim 8, wherein a total area of the plurality of venting holes is configured to be approximately 30% or less of an area of the top plate.

11. The battery unit according to claim 1, wherein the top plate and the venting guide are integrally formed.

12. A battery pack comprising the battery unit of claim 1.

13. The battery pack according to claim 12, further comprising:
a base plate on which the battery unit is mounted; and
a side wall installed on the base plate,
wherein the venting guide is configured to guide flow toward the side wall.

14. An automobile comprising the battery unit of claim 1.

15. A pack case comprising:
a lower frame defining a space for accommodating a battery cell; and
a top cover configured to cover a battery unit accommodated in the space,
wherein the top cover includes a plurality of venting holes and a plurality of venting guides each configured to cover a portion of a corresponding venting hole, and
each of the plurality of venting guides includes:
a peripheral wall protruding from an upper surface of the top cover and extending along a periphery of the corresponding venting hole; and
a cover portion formed on an upper part of the peripheral wall and configured to cover a portion of the corresponding venting hole.

16. The pack case according to claim 15, wherein the cover portion is formed in a roof shape on the upper part of the peripheral wall and covers a portion of the corresponding venting hole.

17. The pack case according to claim 15, wherein a total area of the plurality of venting holes is configured to be approximately 30% or less of an area of the top cover.

18. The pack case according to claim 15, wherein each of the plurality of venting guides is configured to cover approximately 50% or less of the area of the corresponding venting hole.

19. The pack case according to claim 15, wherein each of the plurality of venting guides is arranged to guide flow in the same direction.

20. The pack case according to claim 15, wherein the top cover and the plurality of venting guides are integrally formed.
